# EUROPÄISCHE PATENTSCHRIFT

(11) **EP 3 263 395 B1**
(45) Veröffentlichungstag und Bekanntmachung des Hinweises auf die Patenterteilung: **13.11.2019**
(21) Anmeldenummer: 17175403.9
(22) Anmeldetag: 12.06.2017
(51) Int. Cl.: B60N 2/50, B60N 2/54, B60N 2/16, B60N 2/18

(54) **FEDERUNGSVORRICHTUNG**
SUSPENSION DEVICE
SYSTÈME DE SUSPENSION

(30) Priorität: 01.07.2016 DE 102016112116
(43) Veröffentlichungstag der Anmeldung: 03.01.2018
(73) Patentinhaber: GRAMMER AG, 92224 Amberg (DE)
(72) Erfinder: Schanderl, Florian, 92521 Schwarzenfeld (DE); Meier, Johann, 92269 Fensterbach (DE)
(74) Vertreter: Hannke, Christian

(56) Entgegenhaltungen:
- DE-A1- 19 900 401
- US-A- 2 527 905
- US-A- 2 936 818
- US-A- 3 085 778
- US-A- 4 714 227

## Beschreibung

Die Erfindung betrifft eine Federungsvorrichtung für einen Fahrzeugsitz, umfassend ein Federungsoberteil und ein Federungsunterteil, welche durch eine erste Verbindungsschwinge und eine zweite Verbindungsschwinge miteinander verbunden sind und die erste Verbindungsschwinge schwenkbar um eine erste Schwenkachse an dem Federungsunterteil und schwenkbar um eine zweite Schwenkachse mit dem Federungsoberteil und die zweite Verbindungsschwinge schwenkbar um eine dritte Schwenkachse an dem Federungsunterteil und schwenkbar um eine vierte Schwenkachse an dem Federungsoberteil angeordnet sind,
Es sind aus dem Stand der Technik derartige Federungsvorrichtungen für Fahrzeugsitze bekannt, wobei bei einer Einfederungsbewegung oder durch eine andere Sitzbelastung durch eine auf dem Fahrzeugsitz sitzende Person sich der Fahrzeugsitz in einer Fahrzeugsitzlängsrichtung nach vorne und nach unten bewegt, so dass durch diese ungünstige Bewegung die Kniegelenke der Person bei jeder Bewegung des Fahrzeugsitzes, insbesondere bei einer Bewegung nach unten sehr stark belastet werden. Der Körper der Person möchte seine Sitzposition generell beibehalten, also nicht ändern. Da jedoch der Fahrzeugsitz sich bei einer Einfederungsbewegung nach vorne bewegt, wirkt eine Belastung durch eine erzeugte Kraft auf einen Rücken der Person. Eine gattungsgemässe Federungsvorrichtung ist aus der US4714227 bekannt.

Es ist demzufolge Aufgabe der vorliegenden Erfindung, eine Federungsvorrichtung bereitzustellen, mittels welcher die Kniegelenke der Person während einer Einfederungsbewegung nicht oder kaum belastet werden und eine Belastung des Rückens durch eine Kraft vermieden werden kann und daher der Person einen deutlich höheren Komfort während einer Benutzung des Fahrzeugsitzes entgegenbringt.

Diese Aufgabe wird gemäß den Merkmalen des Patentanspruches 1 gelöst. Vorteilhafte Ausgestaltungen der Erfindung finden sich in den abhängigen Patentansprüchen.

Kerngedanke der Erfindung ist es, eine Federungsvorrichtung für einen Fahrzeugsitz, umfassend ein Federungsoberteil und ein Federungsunterteil, welche durch eine erste Verbindungsschwinge und eine zweite Verbindungsschwinge miteinander verbunden sind und die erste Verbindungsschwinge schwenkbar um eine erste Schwenkachse an dem Federungsunterteil und schwenkbar um eine zweite Schwenkachse mit dem Federungsoberteil und die zweite Verbindungsschwinge schwenkbar um eine dritte Schwenkachse an dem Federungsunterteil und schwenkbar um eine vierte Schwenkachse an dem Federungsoberteil angeordnet sind, bereitzustellen, wobei das Federungsoberteil sich bei einer Bewegung in Richtung zu dem Federungsunterteil hin in einer Längsrichtung des Fahrzeugsitzes gesehen nach hinten und in einer Höhenrichtung des Fahrzeugsitzes nach unten bewegt.

Eine derartige Konstruktion der Federungsvorrichtung entlastet die Kniegelenke und den Rücken der Person deutlich, da eine derartige Bewegung der Federungsvorrichtung nahezu der natürlichen Bewegung des Körpers entspricht.

Sitzt die Person auf dem Fahrzeugsitz, so liegt der Oberschenkel der Person auf einer Sitzfläche auf und der Unterschenkel der Person ist über den Fuß auf einem Karosserieboden oder dergleichen abgestellt. Der Oberschenkel führt daher die Bewegung des Fahrzeugsitzes aus, also eine Bewegung nach hinten und nach unten.

Der Unterschenkel hingegen ist auf dem Karosserieboden oder dergleichen abgestellt, so dass bei einer Bewegung des Federungsoberteils nach unten und nach hinten der Unterschenkel um die Ferse als Drehpunkt bzw. Drehachse gedreht wird.

Insgesamt wird der Unterschenkel also um die Ferse gedreht und der Oberschenkel führt, da er auf einem Sitzteil aufliegt, eine Bewegung nach unten und nach hinten aus, wobei vorzugsweise diese Bewegung einer Linearverschiebung entspricht.

Eine detailliertere Darstellung der Bewegung des Körpers, insbesondere des Kniegelenks, ist den Figuren und deren Beschreibung zu entnehmen.

Erfindungsgemäss ist es konstruktiv vorteilhaft, wenn in der Längsrichtung gesehen die dritte Schwenkachse hinter der ersten Schwenkachse und die vierte Schwenkachse hinter der zweiten Schwenkachse angeordnet ist. Erfindungsgemäss ist in Längsrichtung gesehen die vierte Schwenkachse hinter der dritten Schwenkachse, die dritte Schwenkachse hinter der zweiten Schwenkachse und die zweite Schwenkachse hinter der ersten Schwenkachse angeordnet.

Die erste Schwenkachse ist vorzugsweise die in Fahrzeugsitzlängsrichtung gesehen am weitesten vorne angeordnete Schwenkachse.

Durch eine derartige Anordnung der Schwenkachsen kann erreicht werden, dass die erste und die zweite Verbindungsschwinge sich bei einer Bewegung des Federungsoberteils in Richtung zu dem Federungsoberteil in der gleichen Schwenkrichtung schwenken, insbesondere im Uhrzeigersinn.

Gemäß einer besonders bevorzugten Ausführungsform ist die erste Verbindungsschwinge in einem ersten Winkel zu der Fahrzeugsitzlängsrichtung und die zweite Verbindungsschwinge in einem zweiten Winkel zu der Fahrzeugsitzlängsrichtung angeordnet, wobei der erste und der zweite Winkel höchstens 90 Grad betragen.

Je nach eingestelltem ersten und zweiten Winkel kann die Bewegung des Federungsoberteils beeinflusst werden.

Gemäss der Erfindung kann die Bewegung des Federungsoberteils auch dadurch beeinflusst werden, dass der Abstand zwischen der ersten und zweiten Schwenkachse länger ist als der Abstand zwischen der dritten und der vierten Schwenkachse.

Je nach Wahl des ersten und zweiten Winkels und der Länge der Abstände kann bei einer Bewegung des Federungsoberteils hin zum Federungsunterteil die Neigung des Federungsoberteils verändert werden.

Gemäß der Erfindung ist die erste Verbindungsschwinge parallel zu der zweiten Verbindungsschwinge angeordnet. Dies bedeutet insbesondere, dass die Größe des ersten Winkels der Größe des zweiten Winkels entspricht.

Es entspricht einer vorteilhaften Ausführungsform, wenn die erste Verbindungsschwinge parallel zu der zweiten Verbindungsschwinge angeordnet ist, der Abstand der ersten zu der zweiten Schwenkachse nicht dem Abstand der dritten zu der vierten Schwenkachse entspricht, wobei vorzugsweise der Abstand der ersten zu der zweiten Schwenkachse länger ausgestaltet ist als der Abstand der dritten zu der vierten Schwenkachse.

Gemäß einer weiteren bevorzugten Ausführungsform weist die Federungsvorrichtung mindestens eine Zugfeder auf, welche mit dem Federungsoberteil einerseits und mit der ersten Verbindungsschwinge andererseits verbunden ist. Vorzugsweise kann mittels einer Einstellvorrichtung die Ausschubkraft bzw. die Federrate der Zugfeder verändert werden. Die Einstellvorrichtung ist derart ausgestaltet, den Abstand des ersten Endes, welches mit der ersten Verbindungsschwinge verbunden ist, zu der zweiten Schwenkachse zu verändern, so dass der resultierende Hebelarm von dem ersten Ende zu der zweiten Schwenkachse veränderbar ist und dadurch das Drehmoment und entsprechend die eingeleitete Kraft auf das erste Ende der Zugfeder.

Besonders vorteilhaft umfasst das Federungsoberteil einen Fahrzeugsitz, insbesondere einen Fahrzeugsitz mit einem Sitzteil und einer Rückenlehne.

Weitere vorteilhafte Ausführungsformen ergeben sich aus den Unteransprüchen.

Weitere Ziele, Vorteile und Zweckmäßigkeiten der vorliegenden Erfindung sind der nachfolgenden Beschreibung in Verbindung mit den Zeichnungen zu entnehmen. Hierbei zeigen:
- Fig. 1A: den Fahrzeugsitz gemäß dem Stand der Technik in einer ungefederten Stellung;
- Fig. 1B: den Fahrzeugsitz gemäß dem Stand der Technik in einer eingefederten Stellung;
- Fig. 1C: schematisch einen Vergleich der Fahrzeugsitze gemäß Figur 1A und 1B;
- Fig. 2A: den Fahrzeugsitz gemäß einer bevorzugten Ausführungsform in einer ungefederten Stellung;
- Fig. 2B: den Fahrzeugsitz gemäß einer bevorzugten Ausführungsform in einer gefederten Stellung;
- Fig. 2C: schematisch einen Vergleich der Fahrzeugsitze gemäß Figur 2A und 2B;
- Fig. 3A: Bewegung des Körper bei einer Federungsbewegung gemäß dem Stand der Technik;
- Fig. 3B: Bewegung des Körpers bei einer Federungsbewegung gemäß einer bevorzugten Ausführungsform.

In den Figuren sind gleiche Bauteile jeweils mit den entsprechenden Bezugszeichen zu verstehen. Zur besseren Übersichtlichkeit können in manchen Figuren Bauteile nicht mit einem Bezugszeichen versehen sein, die jedoch an anderer Stelle bezeichnet worden sind.

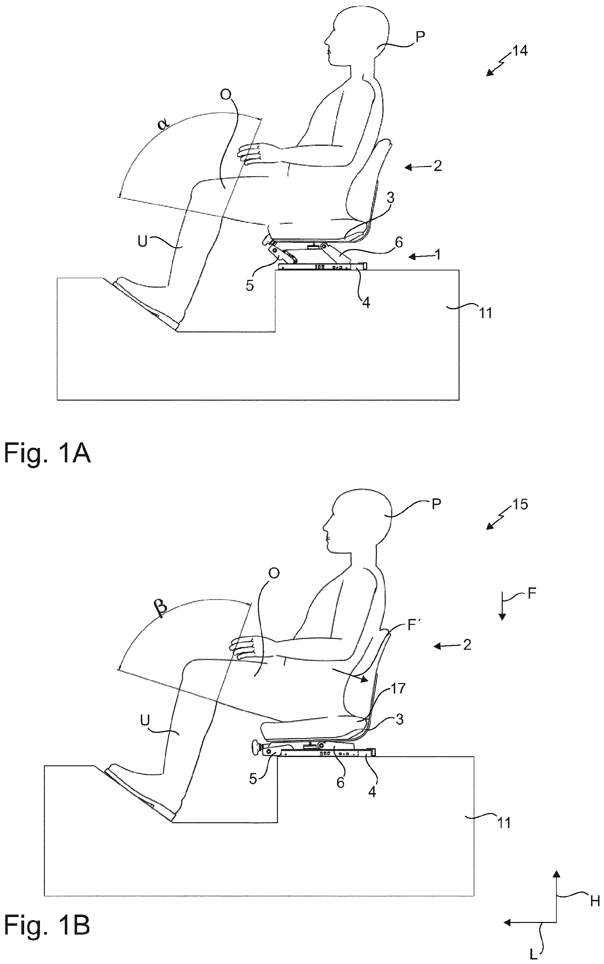

In den Figuren 1A und 1B wird der bisher bekannte Stand der Technik aufgezeigt, wobei die Figur 1A den Fahrzeugsitz 2 bzw. die Federungsvorrichtung 1 in einer ersten Stellung 14 zeigt, also einer nur durch eine Person P belastete Federungsvorrichtung 1 und ohne einer äußeren Krafteinwirkung F, welche eine Bewegung des Federungsoberteils 3 zu dem Federungsunterteil 4 hervorruft.

Die Figur 1B zeigt den Fahrzeugsitz 2 bzw. die Federungsvorrichtung 1 in einer zweiten Stellung 15, also in einer vollständig eingefederten Stellung aufgrund einer Krafteinwirkung F, resultierend in einer Bewegung des Federungsoberteils 3 in Richtung hin zu dem Federungsunterteil 4. Wie aus einem Vergleich der Figuren 1A und 1B zu erkennen ist, wird der Fahrzeugsitz 2 in Längsrichtung L nach vorne und in Höhenrichtung nach unten bewegt.

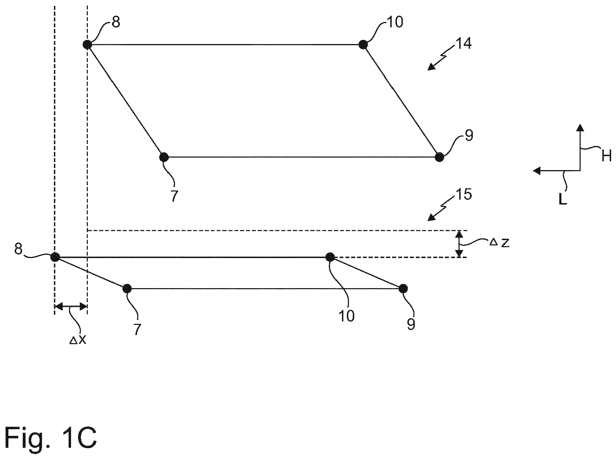

Dieser Vergleich ist schematisch in der Figur 1C dargestellt. Der Versatz nach vorne wird mit Δx und der Versatz nach unten mit Δz bezeichnet.

Wie weiter zu erkennen ist, ändert sich im Vergleich der Figuren 1A und 1B der Winkel zwischen dem Unterschenkel U und dem Oberschenkel O der Person von einem Winkel α zu einem Winkel β, wobei β<α. Durch die Relativbewegung des Körpers der Person P, insbesondere des Oberkörpers und der Oberschenkel O gegenüber der Unterschenkel U und dem Drehpunkt Ferse 16, welcher im Wesentlichen gegenüber der Karosserie ortsfest angeordnet ist, nach vorne, wird eine spürbare Kraft im Rücken erzeugt. Insbesondere schiebt der Fahrzeugsitz 2 den Oberkörper und die Oberschenkel O nach vorne bei einer Bewegung des Federungsoberteils 3 relativ zum Federungsunterteil 4.

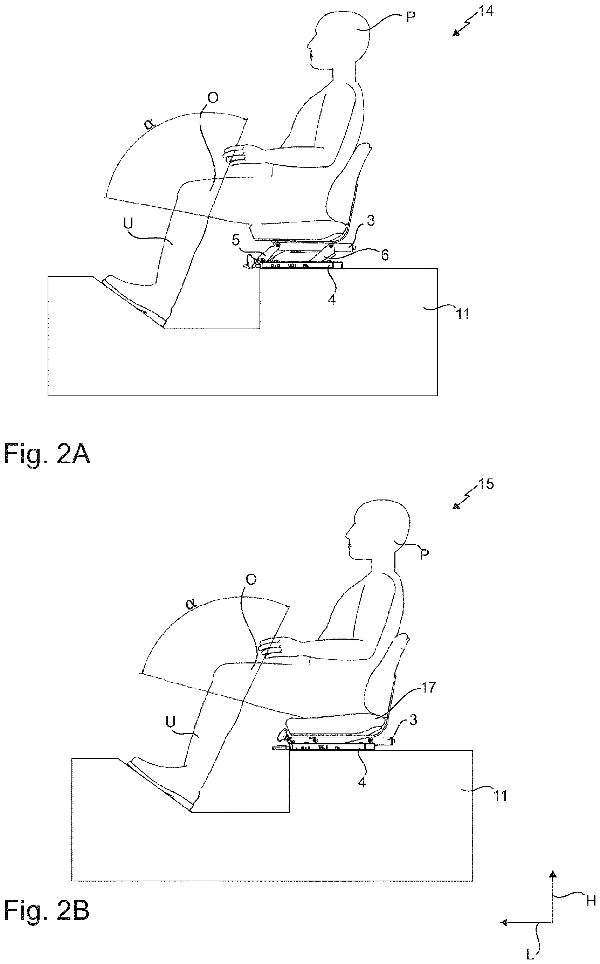

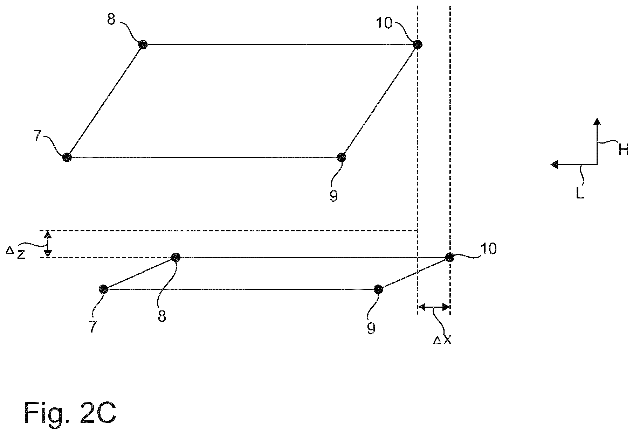

In den Figuren 2A, 2B und 2C ist eine erfindungsgemäße Federungsvorrichtung 1 gemäß einer bevorzugten Ausführungsform gezeigt.

Das Federungsoberteil 3 wird erfindungsgemäß bei einer Bewegung hin zum Federungsunterteil 4 in Längsrichtung L nach hinten und in Höhenrichtung H nach unten bewegt. Dadurch ändert sich der Winkel α zwischen Unterschenkel U und Oberschenkel O nicht oder nur sehr geringfügig. Ein Vergleich der Figur 2A, welche die erste Stellung 14 zeigt, und der Figur 2B, welche die zweite Stellung 15 zeigt, wird schematisch durch die Figur 2C gezeigt.

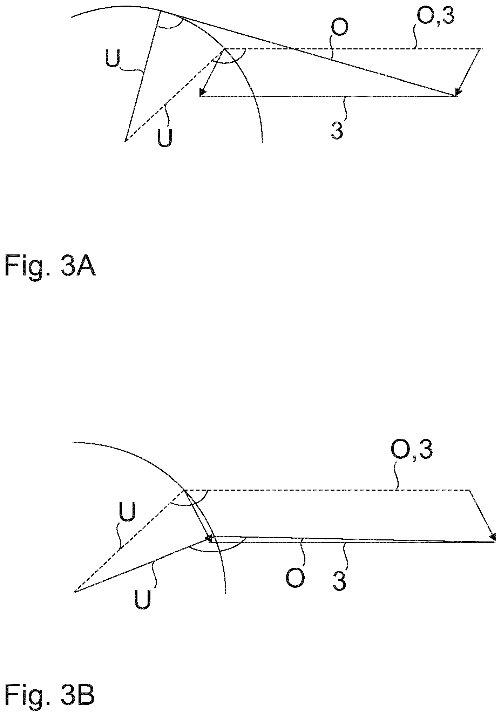

Eine genauere Beschreibung, weshalb bei der erfindungsgemäßen Ausführung der Winkel sich nicht oder nur geringfügig ändert, ist den Figuren 3A und 3B zu entnehmen.
Hierzu wird jeweils das System Unterschenkel-Oberschenkel betrachtet bei einer Bewegung des Federungsoberteils 3 hin zu dem Federungsunterteil 4. Figur 3A zeigt dabei die Situation für die Federungsvorrichtung 1 des Standes der Technik, wohingegen die Figur 3B die Situation der erfindungsgemäßen Federungsvorrichtung 1 zeigt.

Sitzt die Person P auf dem Fahrzeugsitz 2, so liegt der Oberschenkel O der Person P auf einem Sitzteil 17 auf und der Unterschenkel U der Person P ist über den Fuß, insbesondere der Ferse 16, auf einem Karosserieboden 11 oder dergleichen abgestellt. Der Oberschenkel O führt daher die Bewegung des Fahrzeugsitzes, insbesondere des Federungsoberteils 3 aus, also eine Bewegung nach hinten und nach unten.

Der Unterschenkel U hingegen ist auf dem Karosserieboden 11 oder dergleichen abgestellt, so dass bei einer Bewegung des Federungsoberteils 3 nach unten und nach hinten der Unterschenkel U um die Ferse 16 als Drehpunkt bzw. Drehachse 16 gedreht wird.

Insgesamt wird der Unterschenkel U also um die Ferse 16 gedreht und der Oberschenkel O erfährt, da er auf einem Sitzteil 17 aufliegt, eine Bewegung nach unten und nach hinten aus, wobei vorzugsweise diese Bewegung einer Linearverschiebung entspricht.

Sowohl der Unterschenkel U als auch der Oberschenkel O ändern ihre Länge nicht. Das Federungsoberteil 3 bewegt sich um einen Versatz Δx nach hinten und um einen Versatz Δz nach unten. Gleichzeitig wird durch die Verbindung des Oberschenkels O zu dem Unterschenkel U der Unterschenkel U um die Ferse 16 gedreht bzw. verschwenkt.

Gemäß Figur 3A ist zu erkennen, dass durch den Versatz Δx nach vorne der Unterschenkel U entgegen dem Uhrzeigersinn bewegt wird. Da die Verbindung zwischen Unterschenkel U und Oberschenkel O das Kniegelenk ist, bewegt sich auch dieses entsprechend des Unterschenkels. Somit muss zwangsweise der Oberschenkel O nach oben verschwenkt werden, so dass diese Bewegung stattfinden kann. Der Winkel zwischen Oberschenkel O und Unterschenkel U verringert sich daher.

Gemäß Figur 3B ist die Situation gemäß einer erfindungsgemäßen Federungsvorrichtung 1 gezeigt. Das Federungsoberteil 3 mit dem Oberschenkel O bewegt sich erfindungsgemäß nach hinten und nach unten, der Unterschenkel wie bisher auf einer Kreisbahn um die Ferse 16. Durch den Versatz Δx bewegt sich das Kniegelenk zwar nicht mehr ganz auf der Kreisbahn, jedoch annähernd, so dass der Oberschenkel O nur geringfügig gegenüber seiner Ausgangslage ausgelenkt wird. Der Winkel zwischen Oberschenkel O und Unterschenkel U verändert sich daher nur geringfügig. Wenn zusätzlich noch das Federungsoberteil 3 bei einer Relativbewegung des Federungsoberteils 3 gegenüber dem Federungsunterteil 4 nach hinten geneigt wird, kann der Effekt noch verstärkt werden, so dass sich der Winkel zwischen Oberschenkel O und Unterschenkel U nicht ändert, also konstant ist.

### Bezugszeichenliste

- 1: Federungsvorrichtung
- 2: Fahrzeugsitz
- 3: Federungsoberteil
- 4: Federungsunterteil
- 5: erste Verbindungsschwinge
- 6: zweite Verbindungsschwinge
- 7: erste Schwenkachse
- 8: zweite Schwenkachse
- 9: dritte Schwenkachse
- 10: vierte Schwenkachse
- 11: Karosserieboden
- 12: Zugfeder
- 13: Einstelleinrichtung
- 14: erste Stellung
- 15: zweite Stellung
- 16: Drehpunkt Ferse
- 17: Sitzteil

## Patentansprüche

1. Federungsvorrichtung (1) für einen Fahrzeugsitz (2), umfassend ein Federungsoberteil (3) und ein Federungsunterteil (4), welche durch eine erste Verbindungsschwinge (5) und eine zweite Verbindungsschwinge (6) miteinander verbunden sind, welche jeweils genau zwei Schwenkachsen (7, 8; 9, 10) aufweisen, wobei die erste Verbindungsschwinge (5) schwenkbar um eine erste Schwenkachse (7) an dem Federungsunterteil (4) und schwenkbar um eine zweite Schwenkachse (8) mit dem Federungsoberteil (3) und die zweite Verbindungsschwinge (6) schwenkbar um eine dritte Schwenkachse (9) an dem Federungsunterteil (4) und schwenkbar um eine vierte Schwenkachse (10) an dem Federungsoberteil (3) angeordnet sind,
das Federungsoberteil (3) sich bei einer Bewegung in Richtung zu dem Federungsunterteil (4) hin in einer Längsrichtung (L) des Fahrzeugsitzes (2) gesehen nach hinten und in einer Höhenrichtung (H) des Fahrzeugsitzes (2) nach unten bewegt,
in Längsrichtung (L) gesehen die vierte Schwenkachse (10) hinter der dritten Schwenkachse (9), die dritte Schwenkachse (9) hinter der zweiten Schwenkachse (8) und die zweite Schwenkachse (8) hinter der ersten Schwenkachse (7) angeordnet ist, wobei die erste Verbindungsschwinge (5) zumindest in einem unausgelenkten Zustand der Federungsvorrichtung (1) parallel zu der zweiten Verbindungsschwinge (6) angeordnet ist und der Abstand der ersten (7) zur zweiten Schwenkachse (8) länger ausgestaltet ist als der Abstand der dritten (9) zur vierten Schwenkachse (10).

2. Federungsvorrichtung (1) nach Anspruch 1,
**dadurch gekennzeichnet, dass**
die erste Verbindungsschwinge (5) in einem ersten Winkel zu der Längsrichtung (L) und die zweite Verbindungsschwinge (6) in einem zweiten Winkel zu der Längsrichtung (L) angeordnet sind, wobei der erste und der zweite Winkel höchstens 90 Grad betragen.

3. Federungsvorrichtung (1) nach einem Ansprüche 1 oder 2,
**dadurch gekennzeichnet, dass**
mindestens eine Zugfeder mit dem Federungsoberteil (3) und der ersten Verbindungsschwinge (5) verbunden ist und mittels einer Einstelleinrichtung eine Ausschubkraft der Zugfeder veränderbar ist.

4. Federungsvorrichtung (1) nach Anspruch 3,
**dadurch gekennzeichnet, dass**
die Einstelleinrichtung dazu ausgestaltet ist, den Abstand des ersten Endes der Zugfeder zur zweiten Schwenkachse (8) zu verändern.

5. Federungsvorrichtung (1) nach einem der vorangegangenen Ansprüche,
**dadurch gekennzeichnet, dass**
das Federungsoberteil (3) bei einer Relativbewegung des Federungsoberteils (3) gegenüber dem Federungsunterteil (4) nach hinten geneigt wird.

6. Federungsvorrichtung (1) nach einem der vorangegangenen Ansprüche,
**dadurch gekennzeichnet, dass**
die erste (5) und die zweite Verbindungsschwinge (6) bei einer Bewegung des Federungsoberteils (3) in Richtung zu dem Federungsunterteil (4) hin in eine gleiche Schwenkrichtung schwenken.

## Claims

1. Suspension device (1) for a vehicle seat (2), comprising an upper suspension portion (3) and a lower suspension portion (4), said suspension portions being connected to one another by a first swivel connector (5) and a second swivel connector (6), each connector having exactly two swivel axes (7, 8; 9, 10), said first swivel connector (5) being arranged on the lower suspension portion (4) in such a way that it can swivel about a first swivel axis (7) and with the upper suspension portion (3) in such a way that it can swivel about a second swivel axis (8), and said second swivel connector (6) being arranged on the lower suspension portion (4) in such a way that it can swivel about a third swivel axis (9) and on the upper suspension portion (3) in such a way that it can swivel about a fourth swivel axis (10),
the upper suspension portion (3) moves backwards when viewed in a longitudinal direction (L) of the vehicle seat (2) and downwards in a vertical direction (H) of the vehicle seat (2) when moved towards the lower suspension portion (4), the fourth swivel axis (10) being arranged behind the third swivel axis (9), the third swivel axis (9) behind the second swivel axis (8), and the second swivel axis (8) behind the first swivel axis (7) when viewed in the longitudinal direction (L), wherein the first swivel connector (5) is arranged in parallel with the second swivel connector (6) at least in a non-deflected state of the suspension device (1) and the distance between the first (7) and the second swivel axis (8) is designed to be longer than the distance between the third (9) and the fourth swivel axis (10).

2. Suspension device (1) according to claim 1,
**characterised in that**
the first swivel connector (5) is arranged at a first angle to the longitudinal direction (L), and the second swivel connector (6) is arranged at a second angle to the longitudinal direction (L), said first and second angles being no more than 90°.

3. Suspension device (1) according to claim 1 or 2,
**characterised in that**
at least one tension spring is connected to the upper suspension portion (3) and the first swivel connector (5), and the extension force of the tension spring can be varied by means of an adjustment device.

4. Suspension device (1) according to claim 3,
**characterised in that**
the adjustment device is configured to vary the distance between the first end of the tension spring and the second swivel axis (8).

5. Suspension device (1) according to any of the preceding claims,
**characterised in that**
the upper suspension portion (3) is inclined backwards during a relative movement between the upper suspension portion (3) and the lower suspension portion (4).

6. Suspension device (1) according to any of the preceding claims,
**characterised in that**
the first (5) and second swivel connectors (6) swivel in a same swivel direction when the upper suspension portion (3) is moved towards the lower suspension portion (4).

## Revendications

1. Système de suspension (1) pour un siège de véhicule (2), comportant une partie supérieure de suspension (3) et une partie inférieure de suspension (4), lesquelles sont reliées l'une à l'autre par un premier bras oscillant de liaison (5) et un deuxième bras oscillant de liaison (6), lesquels présentent chacun exactement deux axes de pivotement (7,8 ; 9,10), le premier bras oscillant de liaison (5) étant disposé pivotant autour d'un premier axe de pivotement (7) sur la partie inférieure de suspension (4) et pivotant autour d'un deuxième axe de pivotement (8) sur la partie supérieure de suspension (3) et le deuxième bras oscillant de liaison (6) étant disposé pivotant autour d'un troisième axe de pivotement (9) sur la partie inférieure de suspension (4) et pivotant autour d'un quatrième axe de pivotement (10) sur la partie supérieure de suspension (3),
la partie supérieure de suspension (3) se déplaçant vers l'arrière lors d'un déplacement en direction de la partie inférieure de suspension (4) vu dans une direction longitudinale (L) du siège de véhicule (2) et vers le bas dans une direction de la hauteur (L) du siège de véhicule (2),
vu dans la direction longitudinale (L), le quatrième axe de pivotement (10) est disposé derrière le troisième axe de pivotement (9), le troisième axe de pivotement (9), derrière le deuxième axe de pivotement (8), et le deuxième axe de pivotement (8), derrière le premier axe de pivotement (7), le premier bras oscillant de liaison (5) étant disposé au moins un état non dévié du dispositif de suspension (1) parallèlement au deuxième bras oscillant de liaison (6) et la distance du premier (7) au deuxième axe de pivotement (8) étant réalisée plus longue que la distance du troisième (9) au quatrième axe de pivotement (10).

2. Système de suspension (1) selon la revendication 1,
**caractérisé par le fait que**
le premier bras oscillant de liaison (5) est disposé dans un premier angle par rapport à la direction longitudinale (L) et le deuxième bras oscillant de liaison (5), dans un deuxième angle par rapport à la direction longitudinale (L), le premier et le deuxième angle s'élevant au plus à 90 degrés.

3. Système de suspension (1) selon l'une des revendications 1 et 2,
**caractérisé par le fait qu'**
au moins un ressort de traction est relié à la partie supérieure de suspension (3) et au premier bras oscillant de liaison (5) et, au moyen d'un dispositif de réglage, une force d'extension du ressort de traction est modifiable.

4. Système de suspension (1) selon la revendication 3,
**caractérisé par le fait que**
le dispositif de réglage est réalisé de façon à changer la distance de la première extrémité du ressort de traction au deuxième axe de pivotement (8).

5. Système de suspension (1) selon l'une des revendications précédentes,
**caractérisé par le fait que**
la partie supérieure de suspension (3) lors d'un mouvement relatif de la partie supérieure de suspension (3) vis-à-vis de la partie inférieure de suspension (4) est inclinée vers l'arrière.

6. Système de suspension (1) selon l'une des revendications précédentes,
**caractérisé par le fait que**
le premier (5) et le deuxième bras oscillant de liaison (6) lors d'un déplacement de la partie supérieure de suspension (3) dans la direction de la partie inférieure de suspension (4) pivotent dans une même direction de pivotement.
